# EUROPÄISCHE PATENTANMELDUNG

(11) **EP 1 243 305 A1**
(43) Veröffentlichungstag der Anmeldung: **25.09.2002**
(21) Anmeldenummer: 02006222.0
(22) Anmeldetag: 20.03.2002
(51) Int. Cl.: B01D 53/04, B01D 53/14

(54) **Verfahren und Vorrichtung zur Erzeugung von Druckluft**

(30) Priorität: 21.03.2001 DE 10113792; 18.07.2001 EP 01117398
(71) Anmelder: Linde Aktiengesellschaft, 65189 Wiesbaden (DE)
(72) Erfinder: Walz, Andreas, 82515 Wolfratshausen (DE); Hock, Martin, Dr., 81927 München (DE)
(74) Vertreter: Imhof, Dietmar

(57) **Zusammenfassung**

Das Verfahren und die Vorrichtung dienen zur Erzeugung von Druckluft, beispielsweise für eine Luftzerlegungsanlage. Einsatzluft (1) wird einem Luftverdichter (6) zugeführt. Am Austritt des Luftverdichters (6) wird Druckluft (7) abgezogen. Die Einsatzluft wird stromaufwärts des Luftverdichters (6) einem Reinigungsschritt (4) unterzogen.

## Beschreibung

Die Erfindung betrifft ein Verfahren zur Erzeugung von Druckluft, bei dem einem Luftverdichter Einsatzluft zugeführt wird und am Austritt des Luftverdichters Druckluft abgezogen wird.

Solche Verfahren werden beispielsweise in Luftzerlegungsanlagen eingesetzt, in denen Sauerstoff und/oder Stickstoff aus der Druckluft abgetrennt werden. Sie können aber auch für jede andere Anwendung eingesetzt werden, in der Druckluft benötigt wird.

Es ist bekannt, die Druckluft stromabwärts des Luftverdichters zu reinigen. Hierbei werden in der Regel Komponenten entfernt, die bei anschließenden Verfahrensschritten ausfrieren würden. In EP 906779 A1 wird außerdem vorgeschlagen, stromaufwärts einer katalytischen Reinigung feine Stäube und Aerosole aus der Druckluft zu entfernen. Die Anordnung der Reinigungseinheit stromabwärts des Luftverdichters hat einleuchtende Gründe: Die meisten Reinigungsverfahren lassen sich unter Druck wirtschaftlich günstiger durchführen; vielfach erzeugen sie einen nicht unerheblichen Druckverlust und können daher ohne vorherige Verdichtung nicht arbeiten.

Der Erfindung liegt die Aufgabe zugrunde, ein Verfahren der eingangs genannte Art und eine entsprechende Vorrichtung anzugeben, die einen besonders stabilen Betrieb erlauben.

Diese Aufgabe wird dadurch gelöst, dass die Einsatzluft stromaufwärts des Luftverdichters einem Reinigungsschritt zur Entfernung von gasförmigen Luftschadstoffen unterzogen wird, wobei der Reinigungsschritt nicht ausschließlich als ein Adsorptionsschritt ausgebildet ist, der ausschließlich Alugel (activated alumina), ausschließlich Silicagel (silica gel) oder ausschließlich Molekularsieb (molecular sieve) als Adsorptionsmittel enthält.

Der Reinigungsschritt ist so ausgebildet, dass mindestens ein gasförmiger Luftschadstoff aus der Einsatzluft mindestens teilweise entfernt wird. Unter "Luftschadstoffen" werden hier beispielsweise HCI, H₂SO₄, NH₃, SO₂ und/oder Kohlenstoff-Verbindungen verstanden. Der Begriff umfasst insbesondere nicht natürliche Luftbestandteile wie Stickstoff, Sauerstoff, in der Luft enthaltene Edelgase oder Wasser.

In Abweichung von den bisher bekannten Verfahren wird also bereits stromaufwärts des Luftverdichters eine Reinigung der Einsatzluft vorgenommen, die über das normale mechanische Filter hinausgeht. "Reinigungsschritt" umfasst hier nicht Einrichtungen zur Zurückhaltung gröberer fester Fremdkörper aus der Einsatzluft, insbesondere nicht mechanische Grobfilter wie zum Beispiel Drahtgitter.

Im Rahmen der Erfindung hat sich herausgestellt, dass korrosive Komponenten in der Einsatzluft den stabilen Betrieb des Luftverdichters beeinträchtigen können. Es scheint sich dabei weniger um Korrosionsprobleme in der Verdichtermaschine selbst zu handeln als um Schwierigkeiten, die in sekundären Bau- beziehungsweise Betriebskomponenten auftreten. Dabei könnte es sich insbesondere um die chemische Stabilität des Verdichter-Öls und/oder um Korrosionsprobleme in Ölkühler, Verdichter, Prozessluftkühler und/oder Nachkühler handeln. Mögen die Ursachen dieser Probleme im Einzelnen auch nicht vollständig bekannt sein, so lassen sie sich jedenfalls durch die Entfernung von schädigenden Komponenten aus der Einsatzluft stromaufwärts des Luftverdichters lösen. Hierbei werden die schädigenden Komponenten insbesondere HCI, H₂SO₄, NH₃ und/oder SO₂ mindestens teilweise, vorzugsweise im Wesentlichen vollständig, aus der Einsatzluft entfernt, bevor sie in den Luftverdichter eintritt.

Trotz des zusätzlichen apparativen und energetischen Aufwands für den Reinigungsschritt ergibt sich insgesamt ein besonders günstiges Verfahren zur Erzeugung von Druckluft, weil die Betriebsstabilität wesentlich verbessert ist. Dies gilt insbesondere für Standorte mit starker Luftverunreinigung. Im Übrigen kann auf Korrosionsschutz im Inneren der Anlage weitgehend verzichtet werden, sodass insofern auch eine apparative und/oder betriebstechnische Kostenreduzierung möglich ist. Der erfindungsgemäße Reinigungsschritt wird beispielsweise ohne Regenerierung betrieben.

Stromaufwärts des Reinigungsschritts kann die Einsatzluft durch ein mechanisches Filter geleitet werden, insbesondere zur Zurückhaltung grober fester Fremdkörper. Die Erfindung kann jedoch auch ohne mechanisches Filter auskommen.

In dem Reinigungsschritt kann die Einsatzluft durch ein chemisches oder adsorptives Feststofffilter geführt werden. Hierbei können übliche Reaktivstoffe, Adsorptions-, Katalysator- und/oder Getter-Materialien eingesetzt werden. Auch eine Kombination verschiedener derartiger Reinigungsmethoden ist möglich.

Besonders günstig ist es, eine Wäsche als Reinigungsschritt stromaufwärts des Luftverdichters vorzunehmen, alternativ - oder im Einzelfall auch zusätzlich - zu den vorgenannten Methoden. Bei der Wäsche wird bei ein geeignetes flüssiges Waschmittel mit oder ohne chemisch und/oder physikalisch wirkende Zusätze eingesetzt. Die Wäsche wird zum Beispiel in einer Kolonne vorgenommen, die üblicherweise als Blasen-, Packungs-, Füllkörper- oder Siebbodensäule oder als Filmwäscher ausgebildet ist. Als Waschflüssigkeit wird vorzugsweise Wasser, ein Alkohol wie zum Beispiel Methanol oder eine organische Flüssigkeit wie zum Beispiel Polyether eingesetzt. Eine derartige Waschflüssigkeit kann (muss aber nicht) durch chemisch und/oder physikalisch wirkende Zusätze ergänzt werden. In dem Wassermittelkreislauf kann die Abwärme des Luftverdichters und der nachfolgenden Aggregate und Maschinen genutzt werden, insbesondere bei Frostgefahr.

Um auf ein Gebläse für die Einsatzluft verzichten zu können, das für viele andere Reinigungsmethoden erforderlich ist, kann bei dem erfindungsgemäßen Verfahren ein Strahlwäscher eingesetzt werden. Hierbei kann die Reinigung ohne Druckverlust durchgeführt werden; die Einsatzluft kann in dem Reinigungsschritt sogar einen Druckgewinn erfahren.

Die Erfindung betrifft außerdem eine Vorrichtung zur Erzeugung von Druckluft gemäß Patentanspruch 6 oder 7.

Weiterhin bezieht sich die Erfindung auf eine Anwendung des Drucklufterzeugungssystems in einem Verfahren zur Luftzerlegung und auf eine entsprechende Vorrichtung gemäß den Patentansprüchen 8 bis 11.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: ein erstes Ausführungsbeispiel mit Gebläse stromaufwärts der Reinigungseinrichtung und
- Figur 2: ein zweites Ausführungsbeispiel ohne Gebläse.

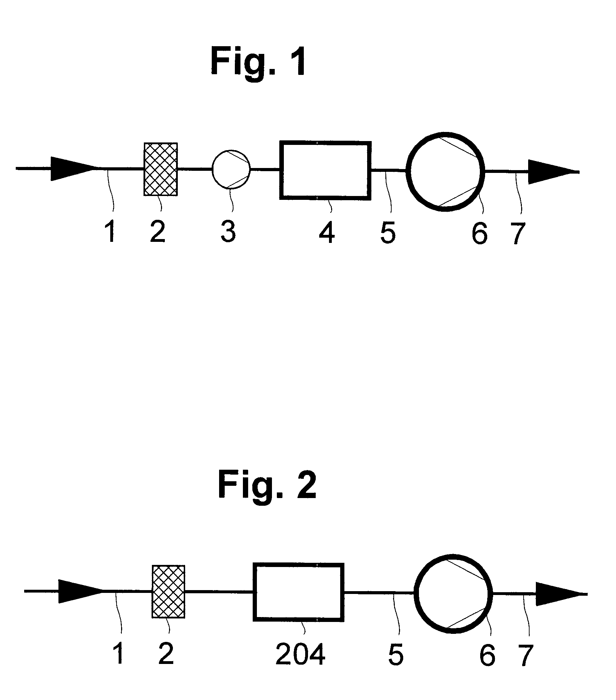

Atmosphärische Luft 1 wird in **Figur 1** über ein mechanisches Filter 2 (oder direkt - nicht dargestellt) angesaugt. Über ein Gebläse 3 wird es durch eine Reinigungseinrichtung 4 gefördert. Die gereinigte Luft 5 wird in einem Luftverdichter 6, der vorzugsweise mehrstufig ausgebildet ist, auf den benötigten Druck gebracht. Über Leitung 7 wird die Druckluft zum Verbraucher gefördert.

Die Reinigungseinrichtung 4 kann mit jeder der oben erwähnten Reinigungsmethoden oder auf andere Weise betrieben werden. Vorzugsweise weist sie eine Waschsäule auf, die als Blasen-, Packungs-, Füllkörper-, Siebboden- oder Rieselfilmsäule ausgebildet ist. Als Waschmittel wird beispielsweise Wasser mit oder ohne chemisch/physikalisch wirkende Zusätze eingesetzt.

Figur 2 unterscheidet sich von Figur 1 dadurch, dass auf das Gebläse verzichtet werden kann. Dies wird dadurch erreicht, dass die Reinigungseinrichtung 204 einen Strahlwäscher aufweist. Als Waschmittel wird beispielsweise ebenfalls Wasser mit oder ohne chemisch/physikalisch wirkende Zusätze eingesetzt.

## Patentansprüche

1. Verfahren zur Erzeugung von Druckluft, bei dem einem Luftverdichter (6) Einsatzluft (1) zugeführt wird und am Austritt des Luftverdichters (6) Druckluft (7) abgezogen wird, **dadurch gekennzeichnet, dass** die Einsatzluft stromaufwärts des Luftverdichters (6) einem Reinigungsschritt (4) zur Entfernung von gasförmigen Luftschadstoffen unterzogen wird, der nicht ausschließlich als Adsorptionsschritt, der ausschließlich Alugel, ausschließlich Silicagel oder ausschließlich Molekularsieb als Adsorptionsmittel enthält, ausgebildet ist.

2. Verfahren nach Anspruch 1, **dadurch gekennzeichnet, dass** die Einsatzluft (1) über ein mechanisches Filter (2) angesaugt wird und der Reinigungsschritt (4) stromabwärts des Filters (2) durchgeführt wird.

3. Verfahren nach Anspruch 1 oder 2, **dadurch gekennzeichnet, dass** die Einsatzluft in dem Reinigungsschritt (4) durch ein chemisches oder adsorptives Feststofffilter geführt wird.

4. Verfahren nach einem der Ansprüche 1 bis 3, **dadurch gekennzeichnet, dass** die Einsatzluft in dem Reinigungsschritt (4) einer Wäsche unterzogen wird, bei der eine Waschflüssigkeit mit oder ohne chemisch und/oder physikalisch wirkende Zusätze eingesetzt wird.

5. Verfahren nach Anspruch 4, **dadurch gekennzeichnet, dass** die Wäsche in einer Strahlwäscher durchgeführt wird.

6. Vorrichtung zur Erzeugung von Druckluft, mit einem Einlass für Einsatzluft, der mit dem Eintritt eines Luftverdichters (6) verbunden ist und mit einer Druckluftleitung (7), die mit dem Austritt des Luftverdichters (6) verbunden ist, **gekennzeichnet durch** eine Reinigungseinrichtung (4), die stromaufwärts des Luftverdichters (6) angeordnet ist.

7. Vorrichtung nach Anspruch 8, **dadurch gekennzeichnet, dass** die Reinigungseinrichtung (4) ein chemisches oder adsorptives Feststofffilter und/oder eine Waschsäule, insbesondere einen Strahlwäscher, aufweist.

8. Anwendung des Verfahrens nach einem der Ansprüche 1 bis 5 beziehungsweise der Vorrichtung nach einem der Ansprüche 6 oder 7 in einem Verfahren zur Luftzerlegung, wobei die Druckluft (7) aus dem Luftverdichter (6) einer Einrichtung zur Erzeugung von Stickstoff und/oder Sauerstoff zugeleitet wird.

9. Anwendung nach Anspruch 8, wobei die Einrichtung zur Erzeugung von Stickstoff und/oder Sauerstoff mindestens eine Rektifiziersäule aufweist.

10. Vorrichtung zur Luftzerlegung mit einer Vorrichtung zur Erzeugung von Druckluft nach einem der Ansprüche 6 oder 7, bei der die Druckluftleitung (7) mit einer Einrichtung zur Erzeugung von Stickstoff und/oder Sauerstoff verbunden ist.

11. Vorrichtung nach Anspruch 10, **dadurch gekennzeichnet, dass** die Einrichtung zur Erzeugung von Stickstoff und/oder Sauerstoff mindestens eine Rektifiziersäule aufweist.
